(19) Europäisches Patentamt

European Patent Office

Office européen des brevets

(11) EP 0 701 779 A1

(12) **EUROPÄISCHE PATENTANMELDUNG**

(43) Veröffentlichungstag:
20.03.1996 Patentblatt 1996/12

(51) Int. Cl.⁶: **A23L 1/236**

(21) Anmeldenummer: 94114592.2

(22) Anmeldetag: 16.09.1994

(84) Benannte Vertragsstaaten:
AT BE CH DE DK ES FR GB GR IE IT LI LU MC NL
PT SE

(71) Anmelder:
• **Meggle GmbH**
  **D-83512 Wasserburg (DE)**
• **Nutrasweet AG**
  **CH-6304 Zug (CH)**

(72) Erfinder:
• **Vetsch, Werner**
  **CH-6318 Walchwil (CH)**

• **Friedl, Thomas Dr.**
  **D-83533 Edling (DE)**
• **Ettmüller, Johann**
  **D-83539 Pfaffing (DE)**

(74) Vertreter: **Blum, Rudolf Emil Ernst**
**c/o E. Blum & Co**
**Patentanwälte**
**Vorderberg 11**
**CH-8044 Zürich (CH)**

(54) **Aspartamhaltige Zusammensetzung für die Direkttablettierung**

(57) Ein Compound basierend auf Aspartam und Trägermittel, insbesonders Lactose sowie dessen Herstellung und Verwendung wird beschrieben. Der Compound weist gutes Fliess- und Kompaktierverhalten auf und ist zur Direkttablettierung von Stüssstofftabletten mit guten Zerfalls- und Lösungseigenschaften geeignet. Die Herstellung des Compounds erfolgt mittels Suspensionssprühtrocknung.

EP 0 701 779 A1

**Beschreibung**

Die vorliegende Erfindung betrifft Ausgangsstoffe für die Direkttablettierung von Süssstoffen, insbesonders des unter dem Namen Aspartam bekannten L-Phenylalanin-L-Aspartylmethylesters sowie Verfahren zu dessen Herstellung und dessen Verwendung.

Süssstoffe, insbesonders Aspartam, haben sich in unserem Leben einen festen Platz erobert, sei es als notwendiger Zuckerersatz von Diabetikern, sei es als gewollter Zuckerersatz bei linienbewusster Ernährung.

Der moderne Süssstoff Aspartam unterscheidet sich im Vergleich mit konventionellen Süssstoffen in wesentlichen Eigenschaften, wie:

- Reinem Süssgeschmack der kaum von Zucker unterschieden werden kann
- Nahrungsmittel-ähnlichem Aufbau (Dipeptidmethylester, Aminosäureester)
- Metabolisierung wie ein Lebensmittel
- Toxikologisch unbedenklich. Höchster Sicherheitswert aller zur Zeit zugelassenen Süssstoffe (Acceptable Daily Intake (ADI), FAO/WHO, FDA).

Die heute üblichen kalorienarmen oder kalorienfreien Süssstoffe weisen eine viel höhere Süsskraft auf als Zucker. Bei Aspartam ist die Süsskraft, bezogen auf identische Gewichte, etwa 200mal höher als jene von Zucker. Die stark erhöhte Süsskraft spielt beispielsweise bei der grosstechnischen Zumischung zu flüssigen Zubereitungen keine Rolle. Dagegen ist die Applikation im Haushalt - aufgrund der geringen zuzudosierenden Menge - schwierig.

Ueblicherweise werden Süssstoffe für den privaten Gebrauch deshalb mit einem Trägerstoff zusammen z.B. in Form von Tabletten angeboten.

Die Tablettenform setzt deren Auflösung voraus, wobei eine möglichst rasche Auflösung angestrebt wird.

Aspartam hat eine relativ geringe Lösungsgeschwindigkeit und wird deshalb vorzugsweise in einer Form mit grosser Oberfläche, also einem feinen Pulver, eingesetzt. Heute übliche aspartamhaltige Tabletten enthalten zudem gut lösliche Trägerstoffe, die einerseits einen raschen Zerfall der Tablette begünstigen, andererseits das Dosiervolumen verbessern.

Ein Problem bei den heute üblichen Verfahren ist, dass sehr feines Aspartam-Pulver elektrostatisch aufladbar ist, nicht frei fliesst und dadurch Tablettierungs- und Staubprobleme bewirkt, während gut fliessendes, gröberes Pulver sich zu langsam auflöst.

EP 0 574 983 beschreibt ein Granulat mit definierter Partikelgrössenverteilung bei dem die Löslichkeit und die Tablettierungseigenschaften optimiert sind.

Der Nachteil bei den heute bekannten Materialien ist, dass sie stets einen Kompromiss darstellen, d.h. verbesserte Tablettierungseigenschaften bei verminderter Lösungsgeschwindigkeit resp. bessere Lösungsgeschwindigkeit bei schlechterer Verarbeitbarkeit.

Aufgabe der vorliegenden Erfindung war es deshalb, einen Ausgangsstoff für die Tablettierung bereitzustellen, der diese Nachteile nicht aufweist.

Diese Aufgabe wurde durch das Bereitstellen einer süssstoffhaltigen Zusammensetzung mit den Merkmalen des Anspruchs 1 gelöst.

Die erfindungsgemässe, süssstoffhaltige Zusammensetzung ist eine Verbindung zwischen Süssstoff und Trägermaterial, die üblicherweise als "integrierter Compound" bezeichnet wird.

Ein solcher integrierter Compound enthält Aspartam im Bereich von 20 bis 80 Gew.-%, vorzugsweise im Bereich von 40 bis 60 Gew.-%.

Die Granulometrie eines solchen Pulvers, das speziell für die Direkt-Tablettierung geeignet ist, liegt üblicherweise im Bereich von

| < 100 µm | 10- 50 % |
| < 200 µm | 30- 90 % |
| < 400 µm | 80-100 % |

vorzugsweise im Bereich von

| | |
|---|---|
| < 100 µm | max. 30 % |
| < 200 µm | 50-80 % |
| < 400 µm | mind. 95 % |

Bei der Tablettierung kann der integrierte Compound entweder direkt, d.h. unvermischt verwendet werden resp. gemischt mit einem Compound anderen Süssstoffgehaltes resp. einem reinen Trägermaterial.

Selbstverständlich kann ein erfindungsgemässer Compound infolge seines guten Fliess- und Lösungsverhaltens auch direkt, d.h. untablettiert verwendet werden, z.B. als Kristallzuckerersatz insbesonders in einen Streubehälter, wie er von Gewürzen her bekannt ist oder in einem Sachet.

Der erfindungsgemässe süssstoffhaltige Compound ist insbesonders für die Herstellung aspartamhaltiger Produkte geeignet. Er kann aber auch für andere Süssstoffe verwendet werden resp. für Süssstoffgemische wie Aspartam-Acesulfam-k, Aspartam-Saccharin, Aspartam-Cyclamat.

Ebenso können auch diverse Trägermaterialien verwendet werden, wobei Lactose bevorzugt ist, geeignet sind aber auch andere Zuckerarten mit geringer Wasserlöslichkeit wie z.B. Mannit oder Maltodextrin.

Die Herstellung eines Compounds wird in der Folge anhand der Zusammensetzung Lactose/Aspartam näher beschrieben.

Zusammenfassend wird zur Herstellung des Produktes eine Mischung aus Aspartam und Lactose in Wasser gegeben, wobei die Bedingungen so gewählt werden, dass definierte Anteile der Trockenkomponenten in kristalliner Form vorliegen und definierte Anteile, insbesonders der Lactose, in Lösung gehen. Die vorliegende Suspension wird anschliessend vorzugsweise über einen Sprühturm unter definierten Bedingungen getrocknet.

Das gemäss diesen Verfahren hergestellte Produkt ist für die Direkttablettierung (d.h. ohne die in der Regel übliche und aufwendige Vorgranulation) zur Produktion von Süssstofftabletten geeignet.

Ausführlicher beschrieben werden bei der Herstellung Aspartam und Lactose, insbesonders Lactosemonohydrat, mit definierter Granulometrie in bestimmten Verhältnissen gemischt und in Wasser teilweise gelöst. Die granulometrischen Daten der Lactose liegen im Bereich von

| | |
|---|---|
| 60 % - 95 % | < 63 micron |
| 85 % - 99 % | < 100 micron |
| 100 % | < 250 micron |

insbesonders im Bereich von

| | |
|---|---|
| 45 % - 75 % | < 32 µm |
| 80 % - 90 % | < 63 µm |
| 90 % - 98 % | < 100 µm |
| 100 % | < 200 µm . |

Die Körnung von Aspartam liegt üblicherweise im Bereich von

| | |
|---|---|
| 6 - 15 % | < 20 µm |
| 90 - 95 % | < 38 µm |
| 100 % | < 150 µm |

Der Anteil Aspartam in der Mischung liegt zwischen 20 Gew.-% und 80 Gew.-%, bevorzugt zwischen 40 Gew.-% und 60 Gew.-%. Das Verhältnis Trockenstoff zu Wasser in der zu versprühenden Suspension (Slurry) variiert zwischen 0,5 : 1,0 und 0,8 : 1,0, insbesondere zwischen 0,6:1 und 0,7:1. Entsprechend der Verarbeitungstemperatur der Suspension von 10-20°C und der Standzeit des Slurry von maximal ca. 1 h - 2 h, vorzugsweise 1 h erhält man ca. 0,5 - 1,0 % gelöstes Aspartam und ca. 5-12 % vorzugsweise 6-10 % gelöste Lactose.

Da die Lactose in mehrheitlich kristalliner Form eingesetzt wird ist es wesentlich, dass ein Anteil der Lactose in Lösung geht, so dass im getrockneten Produkt ein Anteil von mind. 10 % nichtkristalliner resp. amorpher Lactose enthalten ist, vorzugsweise 15 %.

Der Anteil an amorpher Lactose ist für die Tablettierungseigenschaften wesentlich.

Um die chemische Stabilität von Aspartam zu verbessern ist es vorteilhaft, wenn in der Suspension ein pH-Wert zwischen 4,0 und 5,0 vorliegt. Die Einstellung des pH-Werts erfolgt z.B. mit verd. Essigsäure.

Diese Suspension wird dann vorzugsweise einer Sprühtrocknung unterzogen, insbesondere bei Ablufttemperaturen die nicht über ca. 90°C liegen. Unter diesen Bedingungen erhält man einen Gehalt an freiem Wasser von ca. 1,0 - 2,0 %.

Durch die Verwendung spezieller Sprühdüsen, deren besondere Anordnung sowie durch einen definierten Sprühdruck im Bereich von 30 bis 50 bar, erhält man bei der Trocknung aus den kristallinen Lactose- und Aspartam-Anteilen ein Sprühagglomerat, das neben kristallinen Feststoffbrücken durch die glasartig erstarrte amorphe Lactose stabilisiert ist. Es zeigte sich, dass zur Durchführung des Trocknungsverfahrens Hochdruck-Einstoffdüsen gut geeignet sind, mit deren Hilfe die Suspension im Gleichstrom mit der Heissluft zentral versprüht wird. Die Versprühung erfolgt zweckmässigerweise von oben nach unten unter Verwendung von 3-5 derartigen Düsen mit überlappenden Sprühbereichen.

Ein erfindungsgemässer Compound zeigt im allgemeinen folgende Charakteristika:

| - weisses rieselfähiges Pulver | |
|---|---|
| - Schüttdichte: | 0,30 - 0,60 g/ml |
| - Stampfdichte: | 0,35 - 0,75 g/ml |
| - Freies Wasser: | 0,5 - 2,5 % |
| - Granulometrie: | < 100 µm 10- 50 % |
| | < 200 µm 30- 90 % |
| | < 400 µm 80-100 % |
| - Böschungswinkel (Pfrengle): | 28-34° |

Ein solches Produkt weist gute Tablettierungseigenschaften auch auf modernen Hochleistungslaufpressen auf und eignet sich insbesondere zur Direkttablettierung.

Die Tablettierung erfolgt nach Trockenmischung von Trägermaterial/Aspartam Coumpound mit zusätzlichem Trägermaterial, z.B. Lactose (Tablettose), sowie den üblichen Hilfsstoffen wie z.B. Sprengmitteln (z.B. Natriumcarboxymethylcellulose, Natriumstärkeglycolat quervernetzt, Maisstärke, pregelatinisierte Stärke) und Gleitmitteln (z.B. Magnesiumstearat, Stearinsäure, Leucin) nach üblichen Verfahren.

Die aus dem erfindungsgemässen Compound hergestellten Tabletten zeigen in Abhängigkeit von der Tabletten-Bruchfestigkeit und der Rezeptur Zerfallszeiten von max. 0,5 min. und Klar-Lösungszeiten von max. 30-60 Sek., während konventionell hergestellte Tabletten Werte von über 2 Min. zeigen.

Die Erfindung wird in der Folge anhand von Beispielen zusätzlich erläutert:

Beispiel 1:

Herstellung eines Aspartam-Lactose-Süssstoff-Compounds

20 Teile Lactose Monohydrat DAB/EP/USP werden zusammen mit 20 Teilen Aspartam, berechnet als getrocknete Substanz, mit 60 Teilen entmineralisiertem Wasser in einer Dispergier-Homogenisierapparatur zu einer homogenen Suspension angesetzt. Die Granulometrie der eingesetzten Lactose beträgt

| < 32 µm | 50 - 60 % |
|---------|-----------|
| < 63 µm | 80 - 90 % |
| < 100 µm | 95 - 98 % |
| < 200 µm | 100 % |

und jene des Aspartams

| < 38 µm | 90 - 95 % |
|---------|-----------|
| < 20 µm | 6 - 15 % |

Die Suspension wird auf 15°C gekühlt. Nach ca. 10 Min. Homogenisierzeit wird der Ansatz in einen Rührbehälter umgepumpt und von dort innerhalb 1 h mittels Vordruck- und Hochdruckpumpe auf einen Sprühturm zur Trocknung gebracht. Der Sprühdruck bei der Trocknung liegt zwischen 40 und 45 bar. Die Trocknungstemperaturen sind so gewählt (Ablufttemperatur 80-90°C), dass sich im Compound eine relative Pulverfeuchte zwischen 10-20 % rF ergibt.
Durch das beschriebene Verfahren erhält man einen Compound mit folgenden Daten:

| - Weisses rieselfähiges Pulver | |
|-------------------------------|-------------------|
| - Schüttdichte: | 0,40 - 0,45 g/ml |
| - Stampfdichte: | 0,49 - 0,51 g/ml |
| - Freies Wasser: | 1,50 - 1,80 % |
| - Granulometrie: | max. 10 % < 63 µm |
| | max. 5 % > 315 µm |
| - Böschungswinkel (Pfrengle): | 28 - 29°. |

Beispiel 2:

Vergleich Lösungsgeschwindigkeit 100 % Aspartam Pulver, Granulat vs. Lactose/Aspartam Compound 50/50 %.

1. Methode:

500 ml Wasser von 50°C wurden in Becherglas (500 ml) geben. Die Temperatur wurde mittels Heizplatte auf 50°C gehalten. 12,5 g Aspartam Pulver, Granulat oder 25 g Lactose / Aspartam Compound wurden gleichmässig und unter stetigem Rühren mittels IKA Rührwerk (Impeller ⌀ 50 mm, 450 RPM) zum Wasser geben. Die Zeit bis zur vollständigen Klarlöslichkeit wurde bestimmt.

2. Resultate:

| Produkt | Anzahl Messungen | Standard Abweichung | Lösungsgeschwindigkeit ø (Min/Sek.) |
|---|---|---|---|
| Aspartam Pulver (< 100 μm) | 10 | 21,8 % | 5 Min.33 Sek. |
| Aspartam Granulat (180-850 μm) | 5 | 24,5 % | 12 Min.00 Sek. |
| Lactose/Aspartam (60-350 μm) | 10 | 10,6 % | 1 Min.04 Sek. |

3. Bemerkungen:

Die gefundenen Resultate zeigen eine wesentliche Verbesserung der Lösungsgeschwindigkeit von Aspartam wenn dieses in Form eines Lactose/Aspartam Compounds vorliegt. Es wurden eine ca. 5-fache Verbesserung der Lösungsgeschwindigkeit des Lactose/Aspartam Compounds gegenüber Reinaspartam Pulver sowie eine ca. 12-fache Verbesserung der Lösungsgeschwindigkeit gegenüber Aspartam Granulat in Wasser bei 50°C festgestellt.

Die geringe Lösungsgeschwindigkeit von Reinaspartam stellt einen wesentlichen Produktnachteil dar, der durch die vorliegende Erfindung weitgehend eliminiert werden konnte.

Beispiel 3:

| | |
|---|---|
| Aspartam-Lactose Compound (gemäss Beispiel 1) | 90 % |
| Lactose (Tablettose 70, MEGGLE) | 4,5 % |
| Na-Carboxymethyl-Cellulose (NaCMC) (Nymcel ZSB16, Metsä Serla) | 5 % |
| Mg-Stearat (Bärlocher) | 0,5 % |
| Gesamt | 100 % |

1. Komponenten 1-3 in Pulver-Mischer homogen vormischen.
2. MgStearat zugeben und kurz untermischen.
3. Mischung auf Rundlaufpresse mit Rührflügelfüllsystem verpressen.

Mit dieser Formulierung können erfindungsgemäss erstmals kleine Tabletten mit relativ hohem Aspartam-Gehalt, z.B. 60 mg Tabletten (d = 6 mm, plan mit Facette) mit 27 mg Aspartam oder extrem kleine Tabletten mit üblichem Aspartam-Gehalt, z.B. 45 mg Tabletten (d = 5 mm) mit 20 mg Aspartam hergestellt werden.

60 mg Tabletten (d = 6 mm, plan mit Facette) aus Formulierung laut Beispiel 1 weisen folgende Kennzahlen auf:

| | |
|---|---|
| Fliesswinkel Pressmasse | 30° |
| Bruchfestigkeit | 12 N |
| Friabilität | 0,8 % |
| Zerfallszeit ohne Disks (1000 ml, 37°C) | 8-16 sec |
| Auflösungszeit (200 ml, 50°C) | 32-40 sec |
| Masse | 60 ± 1 mg |

Beispiel 4:

| | |
|---|---|
| Aspartam-Lactose Compound | 60,0 % |
| NaCMC (Nymcel ZSB 16, Metsä Serla) | 5,0 % |
| Lactose (Tablettose 70, MEGGLE) | 34,6 % |
| MgStearat | 0,4 % |
| Gesamt | 100,0 % |

1. Komponenten (1-3) in Pulver-Mischer homogen vormischen.
2. MgStearat zugeben und kurz untermischen.
3. Mischung auf Rundlaufpresse mit Rührflügelfüllsystem verpressen.

Mit dieser Formulierung lassen sich 60 mg Tabletten/18 mg Aspartam je Tablette mit überragenden Eigenschaften bei Tablettenzerfall und Klarlöslichkeit herstellen. 60 mg Tabletten (d = 6 mm, plan mit Facette) aus Formulierung lt. Beispiel 1 zeigen folgende Kennzahlen:

| | |
|---|---|
| Fliesswinkel Pressmasse | 30° |
| Bruchfestigkeit | 12 N |
| Friabilität | 0,5 % |
| Zerfallszeit ohne Disks (1000 ml/37°C) | 7-15 Sek. |
| Auflösungszeit (200 ml, 50°C) | 32-40 Sek. |
| Masse | 60 ± 1 mg |

Im Vergleich zur vorliegenden Formulierung zeigt ein konventionell hergestelltes Handelsprodukt folgende Eigenschaften:

| Vergleichsprodukt A | | Vergleichsprodukt B | |
|---|---|---|---|
| Masse: | 80 mg | Masse: | 50 mg |
| Zerfall: | 12-14 Sek. | Zerfall: | 8-10 Sek. |
| Auflösung: | > 120 Sek. | Auflösung: | > 120 Sek. |

Anstelle von Reinaspartam kann selbstverständlich auch eine Mischung von Aspartam mit anderen Süssstoffen und anstelle von Lactose eine Mischung mit einem anderen Trägerstoff wie Maltodextrin oder ein oder mehrere anderer Trägerstoffe verwendet werden.

**Patentansprüche**

1. Compound enthaltend Aspartam und Trägermaterial, dadurch gekennzeichnet, dass ein Teil des Trägermaterials in kristalliner Form und ein weiterer Teil in amorpher Form vorliegt.

2. Compound gemäss Anspruch 1, dadurch gekennzeichnet, dass das Trägermaterial Lactose ist.

3. Compound gemäss Anspruch 1 oder 2, dadurch gekennzeichnet, dass das Aspartam in einer Menge von 20-80 Gew.-% vorliegt.

4. Compound gemäss einem der Ansprüche 1 bis 3, dadurch gekennzeichnet, dass er die folgende Granulometrie aufweist:

| < 32 μm | max. 4 % |
|---|---|
| < 400 μm | max. 10 % |

5. Compound gemäss Anspruch 4, dadurch gekennzeichnet, dass er die folgende Granulometrie aufweist:

| < 100 μm | max. 30 % |
|---|---|
| < 200 μm | 60-75 % |
| > 400 μm | max. 5 % |

6. Compound gemäss einem der Ansprüche 1 bis 5, dadurch gekennzeichnet, dass er einen das Fliessverhalten charakterisierenden Böschungswinkel nach Pfrengle von < 34° aufweist.

7. Verfahren zur Herstellung eines Compounds enthaltend Aspartam und einen Trägerstoff, insbesonders zur Herstellung eines Compounds gemäss einem der Ansprüche 1 bis 6, dadurch gekennzeichnet, dass eine wässrige Suspension von Aspartam und Trägerstoff hergestellt wird, wobei mindestens ein Teil des Trägerstoffs gelöst ist, und anschliessende Sprühtrocknung der Suspension.

8. Verfahren gemäss Anspruch 7, dadurch gekennzeichnet, dass die Suspension mit einem Verhältnis Feststoff:Wasser zwischen 0,5 : 1,0 bis 0,8 : 1,0 hergestellt wird.

9. Verfahren gemäss Anspruch 7 oder 8, dadurch gekennzeichnet, dass die gelösten Anteile an Lactose in der Suspension zwischen 5 und 12 % liegen.

10. Verwendung eines Compounds gemäss einem der Ansprüche 1 bis 6 zur Herstellung von Süssstofftabletten, insbesondere zur Direkttablettierung.

11. Verwendung des Compounds nach einem der Ansprüche 1 bis 6 als Kristallzuckerersatz in Streubehältern oder Sachets.

## EUROPÄISCHER RECHERCHENBERICHT

Europäisches Patentamt

Nummer der Anmeldung

EP 94 11 4592

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | EP-A-0 106 910 (AJINOMOTO) <br><br> * Seite 5, Zeile 1-5 * <br> * Seite 6, Zeile 18-22 * <br> * Seite 6, Zeile 23-25 * | 1,2,10, 11 | A23L1/236 |
| A | * Seite 7, Zeile 10-20 * <br> --- | 3-9 | |
| X | WO-A-85 01862 (GENERAL FOODS) <br> * Ansprüche 1-3 * <br> * Seite 8, Zeile 5-21 * <br> --- | 1,10,11 | |
| D,A | EP-A-0 574 983 (HOLLAND SWEETENER) <br> * das ganze Dokument * <br> --- | 1-11 | |
| X | WO-A-86 06747 (POLIVE-WUHRLIN) <br><br> * Ansprüche * <br> --- | 1,2,10, 11 | |
| X | EP-A-0 335 852 (RAFFINERIE TIRLEMONTOISE) <br> * Ansprüche * <br> ----- | 1,10,11 | |

**RECHERCHIERTE SACHGEBIETE (Int.Cl.6)**

A23L
A61K

Der vorliegende Recherchenbericht wurde für alle Patentansprüche erstellt

| Recherchenort | Abschlußdatum der Recherche | Prüfer |
|---|---|---|
| DEN HAAG | 7.März 1995 | Van Moer, A |

EPO FORM 1503 03.82 (P04C03)